# FASCICULE DE BREVET EUROPEEN

(11) **EP 1 820 328 B1**
(45) Date de publication et mention de la délivrance du brevet: **02.10.2019**
(21) Numéro de dépôt: 05823025.1
(22) Date de dépôt: 29.11.2005
(51) Int. Cl.: H04M 3/22

(54) **PROCÉDÉ ET SYSTÈME DE JOURNAL UNIFIÉ DES APPELS**
EINHEITLICHES ANRUFLOGBUCHVERFAHREN UND SYSTEM
METHOD AND SYSTEM FOR A UNIFIED CALL JOURNAL

(30) Priorité: 08.12.2004 FR 0413091
(43) Date de publication de la demande: 22.08.2007
(73) Titulaire: Orange, 75015 Paris (FR)
(72) Inventeur: BAILLEUL, Nicolas, F-14440 Douvres La Delivrande (FR); KERDRAON, Alan, F-14000 Caen (FR); REBILLON, Jacques-Olivier, F-14220 Mutrecy (FR)
(74) Mandataire: Delumeau, François Guy
(86) Numéro de dépôt international: PCT/FR2005/002966
(87) Numéro de publication internationale: WO 2006/061484

(56) Documents cités:
- EP-A- 0 978 983
- WO-A-03/063519

## Description

La présente invention concerne le domaine des services de télécommunications et en particulier, la coordination de services multi-réseaux.

De tels services permettent à deux utilisateurs équipés d'un terminal respectif connecté à un réseau de téléphonie fixe (RTC) ou mobile (GSM), ou à un réseau IP tel qu'Internet (voix sur IP à l'aide du protocole H.323 ou SIP Session Initiation Protocol), d'établir une communication vocale de type téléphonique, ou de s'échanger des messages textuels en mode synchrone, par l'intermédiaire d'un service tel que SMS (Short Message Service) ou USSD (Unstructured Supplementary Services Data) sur un réseau GSM, ou messagerie instantanée (Chat) sur un réseau IP.

Chacun de ces services donne en général accès à un historique ou journal d'événements de communication survenus dans le cadre de son utilisation, relativement au terminal utilisé pour accéder à ce service. Il en résulte qu'un utilisateur faisant appel à plusieurs de ces services à l'aide d'un ou plusieurs terminaux, disposera d'autant d'historiques d'événements de communication que de services distincts et de terminaux utilisés, sans aucun lien logique entre ces historiques. Par exemple, EP0978983 décrit un journal d'identification de l'appelant téléphonique accessible à distance.

La Demanderesse ne connaît pas de système fournissant une vue globale des événements de communication survenus pour un utilisateur indépendamment du service ou du terminal utilisés.

La présente invention a pour but de supprimer cet inconvénient. Cet objectif est atteint par la prévision d'un procédé de constitution et de mise à jour de journaux d'événements de communication survenant sur des terminaux d'utilisateurs susceptibles de se connecter à un réseau de communication. Selon l'invention, le procédé comprend une étape de traitement comprenant les sous-étapes suivantes de :
- réception d'au moins une information d'identification d'un utilisateur, à partir d'un identifiant de terminal connecté, et de réception des caractéristiques de connexion et de services de communication associés à tous les terminaux connectés d'un utilisateur, à partir de ladite au moins une information d'identification dudit utilisateur ;
- réception depuis un ensemble de terminaux d'utilisateur d'au moins une notification représentative d'un événement de communication comportant au moins un identifiant du terminal émetteur et/ou récepteur dudit événement de communication;
- mise à jour d'au moins un journal d'événements d'utilisateurs à partir de ladite au moins une notification d'événements reçue; et
- transmission dudit au mois un journal d'événements mis à jour aux dits terminaux connectés des utilisateurs correspondants.

Selon un mode de réalisation de l'invention, l'étape de traitement comprend les sous-étapes suivantes de :
- réception pour chacun des terminaux se connectant à l'un des réseaux, d'au moins une caractéristique de connexion du terminal à un réseau et d'au moins une caractéristique représentative d'au moins un service de communication mis en oeuvre par le terminal;
- mémorisation desdites caractéristiques reçues dans un espace de stockage, en association avec au moins une information d'identification d'un utilisateur dudit terminal; et
- à la déconnexion dudit terminal, mise à jour dans l'espace de stockage de ladite au moins une caractéristique de connexion dudit terminal.

Selon un mode de réalisation de l'invention, le procédé comprend une étape de transmission périodique dudit au moins un journal d'événements d'utilisateurs à destination desdits terminaux d'utilisateurs connectés audit réseau de communication.

Selon un mode de réalisation de l'invention, le procédé comprend une étape de transmission dudit au moins un journal d'événement à destination desdits terminaux d'utilisateurs, ladite étape étant exécutée à chaque connexion d'un terminal et à chaque mise à jour dudit au moins un journal d'événements.

L'invention concerne également un serveur pour constituer et mettre à jour des journaux d'événements de communication survenant sur des terminaux d'utilisateurs susceptibles de se connecter à un réseau de communication. Selon l'invention, ce serveur comprend des moyens de traitement programmés pour :
- recevoir des informations d'identification d'utilisateur, à partir d'un identifiant de terminal connecté, et les caractéristiques de connexion et de services de communication de tous les terminaux connectés d'un utilisateur, à partir des informations d'identification de l'utilisateur,
- recevoir des terminaux d'utilisateur des notifications d'événements de communication comportant au moins un identifiant du terminal émetteur et/ou récepteur de l'événement de communication,
- mettre à jour des journaux d'événements d'utilisateurs à partir des notifications d'événements reçues, et
- transmettre les journaux d'événements mis à jour aux terminaux connectés des utilisateurs correspondants.

Selon un mode de réalisation de l'invention, les moyens de traitement du serveur sont programmés pour :
- recevoir de chacun des terminaux lorsqu'ils se connectent à l'un des réseaux, des caractéristiques de connexion du terminal à un réseau et de services de communication mis en oeuvre par le terminal,
- mémoriser ces caractéristiques dans un espace de stockage, en association avec des informations d'identification de l'utilisateur du terminal, et
- à la déconnexion du terminal, mettre à jour dans l'espace de stockage les caractéristiques de connexion du terminal.

Selon un mode de réalisation de l'invention, les moyens de traitement du serveur sont programmés pour transmettre périodiquement les journaux d'événements mis à jour aux terminaux connectés des utilisateurs correspondants.

Selon un mode de réalisation de l'invention, les moyens de traitement du serveur sont programmés pour transmettre les journaux d'événements mis à jour aux terminaux des utilisateurs correspondants à chaque fois qu'ils se connectent à un réseau, et à chaque mise à jour des journaux.

L'invention concerne également un programme d'ordinateur destiné à être exécuté par un serveur pour constituer et mettre à jour des journaux d'événements de communication survenant sur des terminaux d'utilisateurs susceptibles de se connecter à un réseau de communication. Selon l'invention, ce programme est conçu pour réaliser des fonctions de :
- réception d'informations d'identification d'utilisateur, à partir d'un identifiant de terminal connecté, et des caractéristiques de connexion et de services de communication de tous les terminaux connectés d'un utilisateur, à partir des informations d'identification de l'utilisateur,
- réception des terminaux d'utilisateur de notifications d'événements de communication comportant au moins un identifiant du terminal émetteur et/ou récepteur de l'événement de communication,
- mise à jour de journaux d'événements d'utilisateurs à partir des notifications d'événements reçues, et
- transmission des journaux d'événements mis à jour aux terminaux connectés des utilisateurs correspondants.

Un mode de réalisation préféré de l'invention sera décrit ci-après, à titre d'exemple non limitatif, avec référence aux dessins annexés dans lesquels :
La figure 1 représente schématiquement un système selon l'invention, de mise en oeuvre d'un service de journal unifié d'appels ;
La figure 2 représente schématiquement un exemple d'architecture de terminal ;
La figure 3 représente schématiquement un exemple d'architecture de serveur de gestion de profils et de serveur de journal unifié ;
La figure 4 représente sous la forme d'un organigramme une procédure de connexion / déconnexion d'un terminal d'utilisateur pour accéder au service de journal unifié ;
La figure 5 représente sous la forme d'un organigramme une procédure de traitement d'un nouvel événement de communication pour mettre à jour les journaux d'événements de communication des utilisateurs du service ;
La figure 6 représente sous la forme d'un organigramme une procédure de mise à jour d'un journal d'événements de communication sur les terminaux d'utilisateurs.

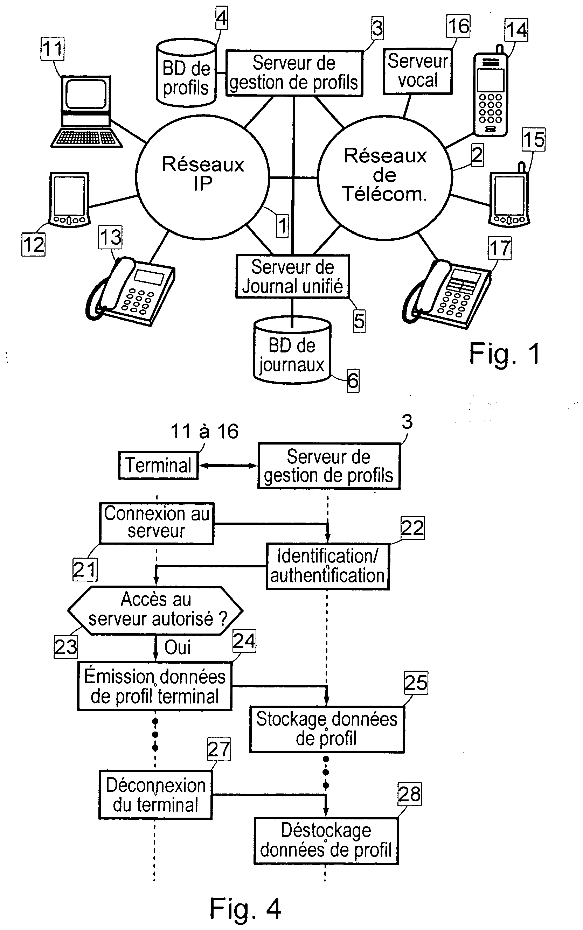

La figure 1 représente un système de communication selon l'invention comprenant un serveur 3 de gestion de profils d'utilisateurs et un serveur de journal unifié 5, connectés à des réseaux de télécommunication fixes et mobiles 2 et à des réseaux IP 1, auxquels des terminaux d'utilisateurs 11 à 15 et 17 peuvent accéder pour communiquer les uns avec les autres.

Le serveur de gestion 3 est connecté à une base de données 4 permettant de mémoriser des paramètres statiques et dynamiques relatifs aux utilisateurs du service et à leurs terminaux. Pour pouvoir accéder au service de journal unifié, chaque utilisateur doit préalablement s'inscrire au service, de manière à définir avec le serveur de gestion de profils 3 un identifiant lui permettant d'être identifié lors de l'accès au service. Cet identifiant peut également être utilisé par les autres utilisateurs pour établir des communications. Le serveur de journal unifié est relié à une base de données 6 de journaux mémorisant un journal pour chacun des utilisateurs du service.

Les terminaux des utilisateurs susceptibles d'accéder au service de communication peuvent être de type PC 11, assistant électronique personnel 12, ou téléphone en voix sur IP 13 connecté à un réseau IP 1, téléphone mobile 14 ou assistant électronique personnel communiquant 15 connecté à un réseau de téléphonie mobile 2, ou encore téléphone fixe 17 raccordé à un réseau téléphonique fixe RTC 2. Les services de communication susceptibles d'être utilisés sur tout ou partie de ces terminaux comprennent des services de téléphonie fixe ou mobile, et des services d'échange de messages textuels synchrones tels que SMS, USSD et messagerie instantanée (Chat).

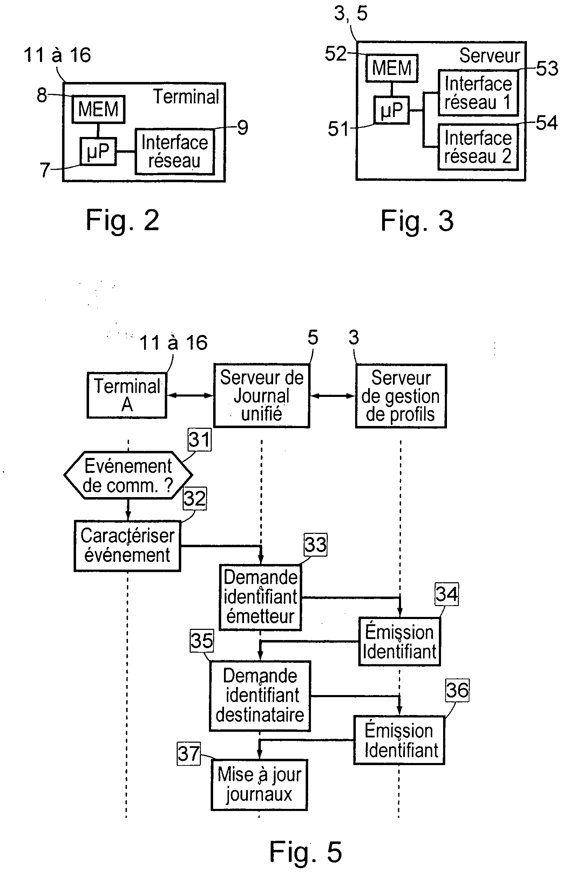

Au moins une partie des terminaux 11 à 13 et téléphone mobile 14 comprend comme représenté sur la figure 2 un processeur 7 connecté à des mémoires 8 et à une interface réseau 9 susceptible de se connecter à l'un des réseaux 1, 2.

Tel que représenté sur la figure 3, les serveurs de gestion de profils 3 et de journal unifié 5 comprennent un processeur 51 connecté à des mémoires 52 et à des interfaces réseau 53, 54 connectées aux réseaux 1, 2.

Pour accéder au service de journal unifié selon l'invention, le processeur 7 de chaque terminal d'utilisateur doit exécuter une application comportant une procédure de connexion telle qu'illustrée sur la figure 4, qui est activée au lancement de l'application. Cette application permet par ailleurs à l'utilisateur de spécifier et de mémoriser localement un profil rassemblant des données personnelles et des données relatives au terminal et à sa configuration, en ce qui concerne notamment les caractéristiques de connexion du terminal à un réseau 1, 2 et des services du terminal utilisables dans le cadre de ces connexions.

Les caractéristiques relatives au terminal (connexions à des réseaux et services liés à ces connexions) peuvent au moins en partie être déterminées par l'application qui à cet effet analyse la configuration du terminal et de ses périphériques, et mémorise cette configuration localement afin de la réutiliser à chaque connexion au service.

Dans le cas d'un terminal 17 de type téléphone RTC, l'application peut être exécutée par un serveur vocal 16 accessible par un réseau RTC 2 que l'utilisateur peut appeler pour signaliser sa présence ou son absence à proximité du téléphone. Les choix et l'identifiant de l'utilisateur sont alors introduits au moyen des touches du clavier du téléphone. Le serveur 16 présente une architecture analogue à celle représentée sur la figure 2. L'application cliente peut également être installée sur un ordinateur couplé à la ligne RTC de l'utilisateur, par exemple dans le cas où l'ordinateur dispose d'un accès ADSL.

Sur la figure 4, la procédure de connexion au service de communication comprend une première étape 21 de connexion physique du terminal au serveur de gestion de profils 3 et de transmission par le terminal au serveur 3 d'informations d'identification / authentification (identifiant et mot de passe) introduites par l'utilisateur. A la réception de ces informations, le serveur de gestion exécute une procédure 22 d'identification / d'authentification de l'utilisateur et transmet en réponse au terminal le résultat de cette procédure. Si dans la réponse reçue par le terminal, le serveur de gestion de profils 3 autorise l'accès du terminal (étape 23), le terminal transmet à l'étape 24 au serveur de gestion de profils 3 les données de profil qui ont été préalablement enregistrées par le terminal. Ces données de profil sont mémorisées par le serveur 3 dans la base de données 4 à l'étape 25, et conservées pendant toute la durée de la connexion du terminal. Lorsque l'utilisateur quitte l'application, celle-ci lance une procédure de déconnexion au cours de laquelle le terminal émet à destination du serveur 3 un ordre de déconnexion, contenant l'identifiant de l'utilisateur et du terminal (étape 27). A la réception de cet ordre, le serveur de gestion retire de la base de données 4, les données de profil qui ont été mémorisées pour ce terminal au cours de l'étape 25.

De cette manière, les profils stockés dans la base de données 4 sont toujours à jour et désignent les terminaux par lesquels les utilisateurs du service peuvent être effectivement joints, même si certains de ces terminaux sont utilisables par plusieurs utilisateurs.

Si l'utilisateur possède plusieurs terminaux par lesquels il peut être joint, il doit exécuter cette procédure pour chacun de ces terminaux, sachant qu'un terminal de type PC peut être équipé pour mettre en oeuvre à la fois, par exemple, un service de téléphonie sur IP, un service de visioconférence et un service de messagerie instantanée ou de Chat.

De cette manière, le serveur de gestion de profils 3 possède la connaissance détaillée des environnements de communication de l'utilisateur.

La figure 5 illustre une procédure de traitement qui est exécutée à l'émission ou la réception d'un nouvel événement de communication, sur un terminal d'utilisateur. Un tel événement peut être l'émission ou la réception d'un appel vocal ou d'un message écrit par un service SMS (Short Message Service) ou un service de messagerie instantanée. Il peut également être constitué par un événement de tonalité dans le cas d'un réseau téléphonique (RTC, IP, mobile).

Cette procédure est déclenchée par l'application de connexion installée sur chaque terminal d'utilisateur, et qui présente à cet effet un mode de fonctionnement espion. A la première étape 31 de cette procédure, l'application de connexion intercepte et stocke cet événement. A l'étape suivante 32, cet événement est caractérisé pour en déterminer le type, l'émetteur, le destinataire et le contenu. L'application de connexion transmet ensuite les informations relatives à l'événement au serveur de journal unifié 5. Aux étapes suivantes 33, 35, le serveur de journal unifié reçoit et stocke ces informations et demande au serveur de gestion de profils 3 les identifiants relatifs au service de journal unifié correspondant à l'émetteur et au destinataire de l'événement. Si l'un et/ou l'autre de l'émetteur et du destinataire de l'événement correspondent à des utilisateurs du service dans la base de données de profils 4, le serveur de gestion de profils transmet l'identifiant de l'émetteur et/ou du destinataire trouvé dans la base de données 4 (étapes 34, 36). Ces identifiants sont reçus par le serveur de journal unifié 5 qui retrouve à l'étape 37 dans la base de données 6 les journaux correspondant aux identifiants d'utilisateur reçus, et met à jour ces journaux avec les informations relatives à l'événement stockées précédemment à l'étape 33.

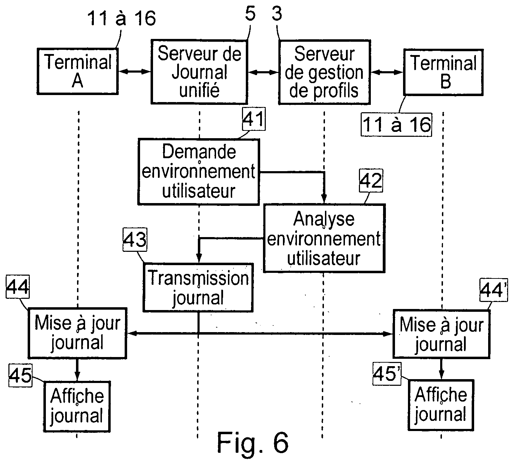

Les journaux mémorisés dans la base de données 6 par le serveur 5 sont ensuite transmis aux terminaux d'utilisateurs connectés au service de journal unifié pour qu'ils soient accessibles aux utilisateurs. A cet effet, le serveur 5 déclenche une procédure de mise à jour illustrée sur la figure 6, qui est exécutée pour chacun des utilisateurs du service de journal unifié.

A la première étape 41 de cette procédure, le serveur 5 envoie au serveur de gestion de profils 3 une requête d'environnement de l'utilisateur, contenant l'identifiant de l'utilisateur relatif au service de journal unifié. A l'étape suivante 42, le serveur 3 reçoit cette requête et analyse l'environnement de l'utilisateur correspondant à l'identifiant reçu et retourne au serveur 5 les informations de connexion permettant de joindre les différents terminaux de l'utilisateur connectés au service. A l'étape suivante 43, le serveur 5 utilise les informations de connexion reçues pour transmettre le journal de l'utilisateur stocké dans la base de données 6 à tous les terminaux connectés de ce dernier. Ce journal est reçu par chacun des terminaux (dans l'exemple de la figure 6, par les terminaux A et B) connectés de l'utilisateur aux étapes 44, 44', et affiché sur chacun de ces terminaux aux étapes 45, 45'.

Alternativement, le journal à transmettre à un utilisateur peut être envoyé par le serveur 5 de journal unifié au serveur 3 de gestion de profils qui le transmet ensuite à chacun des terminaux connectés de l'utilisateur.

Cette procédure de mise à jour de chacun d es terminaux connectés d'un utilisateur peut être déclenchée par le serveur 5 périodiquement et/ou à chaque arrivée d'un événement de communication, c'est-à-dire à chaque mise à jour d'un journal stocké dans la base de données 6 par le serveur 5, et de préférence à chaque connexion d'un terminal d'utilisateur du service, à la suite de l'étape 25. De cette manière, le journal d'événements de communication stocké par un terminal d'utilisateur connecté est toujours à jour.

Bien entendu, les fonctions du serveur de gestion de profils et du serveur de journal unifié peuvent être exécutées sur un même calculateur ou sur des calculateurs distincts.

## Revendications

1. Procédé pour constituer et mettre à jour des journaux d'événements de communication survenant sur des terminaux d'utilisateurs (11 à 15, 17) susceptibles de se connecter à un réseau de communication (1, 2),
**caractérisé en ce qu'**il comprend une étape de traitement comprenant les sous-étapes suivantes de :
- réception d'au moins une information d'identification d'un utilisateur, à partir d'un identifiant de terminal connecté, et de réception des caractéristiques de connexion et de services de communication associés à tous les terminaux connectés d'un utilisateur, à partir de ladite au moins une information d'indentification dudit utilisateur ;
- réception depuis un ensemble de terminaux d'utilisateur d'au moins une notification représentative d'un événement de communication comportant au moins un identifiant du terminal émetteur et/ou récepteur dudit événement de communication ;
- mise à jour d'au moins un journal d'évènements d'un utilisateur à partir de ladite au moins une notification d'événements reçue ; et
- transmission dudit au moins un journal d'événements mis à jour aux dits terminaux connectés de l'utilisateur correspondant.

2. Procédé selon la revendication 1, **caractérisé en ce que** ladite étape de traitement comprend les sous-étapes suivantes de :
- réception pour chacun des terminaux (11 à 15, 17) se connectant à l'un des réseaux (1, 2) d'au moins une caractéristique de connexion du terminal à un réseau (1, 2) et d'au moins une caractéristique représentative d'au moins un service de communication mise en oeuvre par le terminal ;
- mémorisation desdites caractéristiques reçues dans un espace de stockage (4), en association avec au moins une information d'identification d'un utilisateur dudit terminal ; et
- à la déconnexion dudit terminal, mise à jour dans l'espace de stockage de ladite au moins une caractéristique de connexion dudit terminal.

3. Procédé selon les revendications 1 et 2,
**caractérisé en ce qu'**il comprend une étape de transmission périodique dudit au moins un journal d'événements d'utilisateurs à destination desdits terminaux d'utilisateur connectés audit réseau de communication (1, 2).

4. Procédé selon l'une des revendications 1 à 3, **caractérisé en ce qu'**il comprend une étape de transmission dudit au moins un journal d'événements à destination desdits terminaux d'utilisateurs, ladite étape étant exécutée à chaque connexion d'un terminal et à chaque mise à jour dudit au moins un journal d'événements.

5. Serveur pour constituer et mettre à jour des journaux d'événements de communication survenant sur des terminaux d'utilisateurs (11 à 15, 17) susceptibles de se connecter à un réseau de communication (1, 2),
**caractérisé en ce qu'**il comprend des moyens de traitement (51 à 54) programmés pour :
- recevoir des informations d'identification d'un utilisateur, à partir d'un identifiant de terminal connecté, et les caractéristiques de connexion et de services de communication de tous les terminaux connectés d'un utilisateur, à partir des informations d'identification de l'utilisateur,
- recevoir des terminaux d'utilisateurs des notifications d'événements de communication comportant au moins un identifiant du terminal émetteur et/ou récepteur de l'événement de communication,
- mettre à jour des journaux d'événements d'un utilisateur à partir des notifications d'événements reçues, et
- transmettre les journaux d'événements mis à jour aux terminaux connectés de l'utilisateur correspondant.

6. Serveur selon la revendication 5,
**caractérisé en ce que** les moyens de traitement (51 à 54) programmés pour :
- recevoir de chacun des terminaux (11 à 15, 17) lorsqu'ils se connectent à l'un des réseaux (1, 2), des caractéristiques de connexion du terminal à un réseau (1, 2) et de services de communication mis en oeuvre par le terminal,
- mémoriser ces caractéristiques dans un espace de stockage (4), en association avec des informations d'identification de l'utilisateur du terminal, et
- à la déconnexion du terminal, mettre à jour dans l'espace de stockage les caractéristiques de connexion du terminal.

7. Serveur selon la revendication 5 ou 6,
**caractérisé en ce que** les moyens de traitement (51 à 54) programmés pour transmettre périodiquement les journaux d'événements mis à jour aux terminaux connectés des utilisateurs correspondants.

8. Serveur selon l'une des revendications 5 à 7,
**caractérisé en ce que** les moyens de traitement (51 à 54) programmés pour transmettre les journaux d'événements mis à jour aux terminaux des utilisateurs correspondants à chaque fois qu'ils se connectent à un réseau, et à chaque mise à jour des journaux.

9. Programme d'ordinateur destiné à être exécuté par un serveur pour constituer et mettre à jour des journaux d'événements de communication survenant sur des terminaux d'utilisateurs (11 à 15, 17) susceptibles de se connecter à un réseau de communication (1, 2),
**caractérisé en ce qu'**il est conçu pour réaliser des fonctions de :
- réception d'informations d'identification d'utilisateur, à partir d'un identifiant de terminal connecté, et des caractéristiques de connexion et de services de communication de tous les terminaux connectés d'un utilisateur, à partir des informations d'identification de l'utilisateur,
- réception des terminaux d'utilisateur de notifications d'événements de communication comportant au moins un identifiant du terminal émetteur et/ou récepteur de l'événement de communication,
- mise à jour de journaux d'événements d'utilisateurs à partir des notifications d'événements reçues, et
- transmission des journaux d'événements mis à jour aux terminaux connectés des utilisateurs correspondants.

## Patentansprüche

1. Verfahren zum Erstellen und Aktualisieren von Kommunikationsereignisprotokollen, die an Benutzerendgeräten (11 bis 15, 17) auftreten, die mit einem Kommunikationsnetzwerk (1, 2) verbunden werden können, **dadurch gekennzeichnet, dass** es einen Verarbeitungsschritt umfasst, der die folgenden Unterschritte umfasst:
- Empfangen mindestens einer Information zur Identifizierung eines Benutzers, ausgehend von einer Kennung des verbundenen Endgeräts, und Empfangen der Merkmale der Verbindung und der Kommunikationsdienste, die allen verbundenen Endgeräten eines Benutzers zugeordnet sind, ausgehend von der mindestens einen Information zur Identifizierung des Benutzers;
- Empfangen von einer Gruppe von Benutzerendgeräten von mindestens einer repräsentativen Kommunikationsereignismitteilung, die mindestens eine Kennung des sendenden und/oder empfangenden Endgeräts des Kommunikationsereignisses enthält;
- Aktualisieren von mindestens einem Ereignisprotokoll eines Benutzers, ausgehend von der mindestens einen empfangenen Ereignismitteilung; und
- Übertragen des mindestens einen Ereignisprotokolls an die verbundenen Endgeräte des zugehörigen Benutzers.

2. Verfahren nach Anspruch 1, **dadurch gekennzeichnet, dass** der Verarbeitungsschritt die folgenden Unterschritte umfasst:
- Empfangen für jedes der Endgeräte (11 bis 15, 17), die sich mit einem der Netzwerke (1, 2) verbinden, von mindestens einem Merkmal der Verbindung des Endgeräts mit einem Netzwerk (1, 2) und von mindestens einem repräsentativen Merkmal mindestens eines Kommunikationsdienstes, der von dem Endgerät umgesetzt wird;
- Speichern der empfangenen Merkmale in einem Speicherplatz (4), in Verbindung mit mindestens einer Information zur Identifizierung eines Benutzers des Endgeräts; und
- Aktualisieren im Speicherplatz des mindestens einen Merkmals der Verbindung des Endgeräts beim Trennen des Endgeräts.

3. Verfahren nach Anspruch 1 und 2, **dadurch gekennzeichnet, dass** es einen Schritt für ein periodisches Übertragen des mindestens einen Benutzer-Ereignisprotokolls an die mit dem Kommunikationsnetz (1, 2) verbundenen Benutzerendgeräte umfasst.

4. Verfahren nach einem der Ansprüche 1 bis 3, **dadurch gekennzeichnet, dass** es einen Schritt für ein Übertragen des mindestens einen Ereignisprotokolls an die Benutzerendgeräte umfasst, wobei dieser Schritt bei jedem Verbinden eines Endgeräts und bei jedem Aktualisieren des mindestens einen Ereignisprotokolls ausgeführt wird.

5. Server zum Erstellen und Aktualisieren von Kommunikationsereignisprotokollen, die an Benutzerendgeräten (11 bis 15, 17) auftreten, die mit einem Kommunikationsnetzwerk (1, 2) verbunden werden können, **dadurch gekennzeichnet, dass** es Verarbeitungsmittel (51 bis 54) umfasst, die programmiert sind zum:
- Empfangen von Informationen zur Identifizierung eines Benutzers, ausgehend von einer Kennung des verbundenen Endgeräts, und der Merkmale der Verbindung und der Kommunikationsdienste aller verbundenen Endgeräte eines Benutzers, ausgehend von den Informationen zur Identifizierung des Benutzers,
- Empfangen von Benutzerendgeräten von Kommunikationsereignismitteilungen, die mindestens eine Kennung des sendenden und/oder empfangenden Endgeräts des Kommunikationsereignisses enthalten,
- Aktualisieren der Ereignisprotokolle eines Benutzers, ausgehend von den empfangenen Ereignismitteilungen, und
- Übertragen der aktualisierten Ereignisprotokolle an die verbundenen Endgeräte des zugehörigen Benutzers.

6. Server nach Anspruch 5, **dadurch gekennzeichnet, dass** die Verarbeitungsmittel (51 bis 54) programmiert sind zum:
- Empfangen von jedem der Endgeräte (11 bis 15, 17), wenn sie sich mit einem der Netzwerke (1, 2) verbinden, von Merkmalen der Verbindung des Endgeräts mit einem Netzwerk (1, 2) und von Kommunikationsdiensten, die von dem Endgerät umgesetzt werden,
- Speichern dieser Merkmale in einem Speicherplatz (4), in Verbindung mit den Informationen zur Identifizierung des Benutzers des Endgeräts, und
- Aktualisieren im Speicherplatz der Merkmale der Verbindung des Endgeräts beim Trennen des Endgeräts.

7. Server nach Anspruch 5 oder 6, **dadurch gekennzeichnet, dass** die Verarbeitungsmittel (51 bis 54) programmiert sind zum periodischen Übertragen der aktualisierten Ereignisprotokolle an die verbundenen Endgeräte der zugehörigen Benutzer.

8. Server nach einem der Ansprüche 5 bis 7, **dadurch gekennzeichnet, dass** die Verarbeitungsmittel (51 bis 54) programmiert sind zum Übertragen der aktualisierten Ereignisprotokolle an die Endgeräte der zugehörigen Benutzer, und zwar jedes Mal, wenn sie sich mit einem Netzwerk verbinden, und bei jeder Aktualisierung der Protokolle.

9. Computerprogramm, das von einem Server ausgeführt werden soll zum Erstellen und Aktualisieren von Kommunikationsereignisprotokollen, die an Benutzerendgeräten (11 bis 15, 17) auftreten, die mit einem Kommunikationsnetzwerk (1, 2) verbunden werden können, **dadurch gekennzeichnet, dass** es entwickelt ist, um die Funktionen zu realisieren zum:
- Empfangen von Informationen zur Identifizierung eines Benutzers, ausgehend von einer Kennung des verbundenen Endgeräts, und von Merkmalen der Verbindung und der Kommunikationsdienste aller verbundenen Endgeräte eines Benutzers, ausgehend von den Informationen zur Identifizierung des Benutzers,
- Empfangen von Benutzerendgeräten von Kommunikationsereignismitteilungen, die mindestens eine Kennung des sendenden und/oder empfangenden Endgeräts des Kommunikationsereignisses enthalten,
- Aktualisieren der Ereignisprotokolle von Benutzern, ausgehend von den empfangenen Ereignismitteilungen, und
- Übertragen der aktualisierten Ereignisprotokolle an die verbundenen Endgeräte der zugehörigen Benutzer.

## Claims

1. Method for forming and updating logs of communication events occurring on user terminals (11 to 15, 17) that are liable to be connected to a communication network (1, 2),
**characterized in that** it comprises a processing step comprising the following substeps of:
- receiving at least one item of information identifying a user, on the basis of an identifier of a connected terminal, and receiving the connection and communication service characteristics that are associated with all of the connected terminals of a user, on the basis of said at least one item of information identifying said user;
- receiving, from a set of user terminals, at least one notification that is representative of a communication event including at least one identifier of the terminal transmitting and/or receiving said communication event;
- updating at least one event log of a user on the basis of said at least one received event notification; and
- transmitting said at least one updated event log to said connected terminals of the corresponding user.

2. Method according to Claim 1, **characterized in that** said processing step comprises the following substeps of:
- receiving, for each of the terminals (11 to 15, 17) being connected to one of the networks (1, 2), at least one characteristic of the connection of the terminal to a network (1, 2) and at least one characteristic that is representative of at least one communication service that is implemented by the terminal;
- storing said received characteristics in a storage space (4), in combination with at least one item of information identifying a user of said terminal; and
- on said terminal being disconnected, updating, in the storage space, said at least one connection characteristic of said terminal.

3. Method according to Claims 1 and 2, **characterized in that** it comprises a step of periodically transmitting said at least one user event log to said user terminals that are connected to said communication network (1, 2).

4. Method according to one of Claims 1 to 3, **characterized in that** it comprises a step of transmitting said at least one event log to said user terminals, said step being carried out each time a terminal is connected and each time said at least one event log is updated.

5. Server for forming and updating logs of communication events occurring on user terminals (11 to 15, 17) that are liable to be connected to a communication network (1, 2),
**characterized in that** it comprises processing means (51 to 54) that are programmed:
- to receive information identifying a user, on the basis of an identifier of a connected terminal, and the connection and communication service characteristics of all of the connected terminals of a user, on the basis of the information identifying the user;
- to receive, from the user terminals, communication event notifications including at least one identifier of the terminal transmitting and/or receiving the communication event;
- to update event logs of a user on the basis of the received event notifications; and
- to transmit the updated event logs to the connected terminals of the corresponding user.

6. Server according to Claim 5,
**characterized in that** the processing means (51 to 54) are programmed:
- to receive, from each of the terminals (11 to 15, 17) when they are connected to one of the networks (1, 2), characteristics of the connection of the terminal to a network (1, 2) and communication services that are implemented by the terminal;
- to store these characteristics in a storage space (4), in combination with information identifying the user of the terminal; and
- on the terminal being disconnected, to update, in the storage space, the connection characteristics of the terminal.

7. Server according to Claim 5 or 6,
**characterized in that characterized in that** the processing means (51 to 54) are programmed to periodically transmit the updated event logs to the connected terminals of the corresponding users.

8. Server according to one of Claims 5 to 7, **characterized in that** the processing means (51 to 54) are programmed to transmit the updated event logs to the terminals of the corresponding users each time they are connected to a network and each time the logs are updated.

9. Computer program that is intended to be run by a server for forming and updating logs of communication events occurring on user terminals (11 to 15, 17) that are liable to be connected to a communication network (1, 2),
**characterized in that** it is designed to perform functions of:
- receiving information identifying a user, on the basis of an identifier of a connected terminal, and the connection and communication service characteristics of all of the connected terminals of a user, on the basis of the information identifying the user;
- receiving, from the user terminals, communication event notifications including at least one identifier of the terminal transmitting and/or receiving the communication event;
- updating user event logs on the basis of the received event notifications; and
- transmitting the updated event logs to the connected terminals of the corresponding users.
